# NEUE EUROPÄISCHE PATENTSCHRIFT

(11) **EP 2 668 067 B2**
(45) Veröffentlichungstag und Bekanntmachung des Hinweises auf die Entscheidung über den Einspruch: **27.02.2019**
(45) Hinweis auf die Patenterteilung: 13.01.2016
(21) Anmeldenummer: 12702996.5
(22) Anmeldetag: 18.01.2012
(51) Int. Cl.: B60Q 1/48, B62D 15/02, B62D 1/00

(54) **VERFAHREN ZUM AUTOMATISCHEN DURCHFÜHREN EINES FAHRMANÖVERS**
METHOD FOR AUTOMATICALLY CARRYING OUT A DRIVING MANOEUVRE
PROCÉDÉ PERMETTANT L'EXÉCUTION AUTOMATIQUE D'UNE MAN UVRE D'UN VÉHICULE

(30) Priorität: 27.01.2011 DE 102011003231
(43) Veröffentlichungstag der Anmeldung: 04.12.2013
(73) Patentinhaber: Robert Bosch GmbH, 70442 Stuttgart (DE)
(72) Erfinder: RAISCH, Florian, 71116 Gaertringen (DE); IRION, Albrecht, 70563 Stuttgart (DE); PAMPUS, Christian, 71229 Leonberg (DE); PENSKE, Kai, 71272 Renningen (DE)
(86) Internationale Anmeldenummer: PCT/EP2012/050720
(87) Internationale Veröffentlichungsnummer: WO 2012/101021

(56) Entgegenhaltungen:
- EP-A1- 1 602 530
- EP-A2- 1 249 379
- WO-A1-2006/092370
- DE-A1- 19 817 142
- DE-A1-102006 060 456
- DE-A1-102008 019 346
- DE-A1-102008 033 925
- DE-A1-102008 044 160
- JP-A- 2006 221 339
- US-A1- 2010 283 634

## Beschreibung

Die Erfindung betrifft ein Verfahren zum automatischen Durchführen eines Fahrmanövers, bei dem in einem ersten Schritt die Umgebung des Kraftfahrzeugs erfasst wird und in einem zweiten Schritt anhand der erfassten Daten der Umgebung eine Trajektorie berechnet wird, entlang der das Kraftfahrzeug während des Fahrmanövers bewegt wird.

### Stand der Technik

Verfahren zur Unterstützung eines Fahrers eines Kraftfahrzeugs sind zum Beispiel Verfahren, die den Fahrer beim Einparken des Kraftfahrzeugs oder beim Befahren enger Straßen unterstützen. Die vorliegende Erfindung bezieht sich dabei insbesondere auf solche Verfahren, die den Fahrer bei einem Einparkmanöver in eine Parklücke unterstützen.

Das Dokument US 2010/0283634 beschreibt eine Steuereinrichtung für eine Anzeigeeinrichtung einer Einparkeinrichtung und ein Verfahren zur Darstellung einer vorderen und/oder hinteren Parklückenbegrenzung. Dazu werden zwei verschiedene Erfassungseinrichtungen verwendet, eine erste Erfassungseinrichtung zum Erfassen einer Parklücke bei einer seitlichen Vorbeifahrt und eine zweite Erfassungseinrichtung zum Erfassen einer vorderen und/oder hinteren Begrenzung der Parklücke. Bei der ersten Erfassungseinrichtung werden vor allem Sensoren verwendet, die sich auf der Fahrzeuglängsseite befinden und bei der zweiten Erfassungseinrichtung werden vor allem die Sensoren in der Stoßstange verwendet.

Bei Verfahren zur Unterstützung des Fahrers bei einem Einparkmanöver wird unterschieden zwischen semiautomatischen Verfahren und vollautomatischen Verfahren. Bei semiautomatischen Verfahren wird eine Trajektorie berechnet und dem Fahrer werden Anweisungen gegeben, wie dieser das Kraftfahrzeug zu bewegen hat, um entlang der Trajektorie in die Parklücke einzuparken. Demgegenüber wird bei vollautomatischen Systemen der Einparkvorgang vollständig vom Fahrassistenzsystem übernommen und das Kraftfahrzeug automatisch in die Parklücke eingeparkt.

Um das Kraftfahrzeug in die Parklücke zu bewegen, wird zunächst eine Bahn, entlang der das Kraftfahrzeug bewegt werden soll, eine so genannte Trajektorie, berechnet. Zur Berechnung ist es notwendig, die Geometrie der Parklücke und die Position des Kraftfahrzeuges zu kennen. Die Geometrie der Parklücke wird dabei mit geeigneten Sensoren erfasst. Anhand der von den Sensoren erfassten Daten lässt sich eine Umgebungskarte des Kraftfahrzeuges erzeugen und eine geeignete Trajektorie in die Parklücke berechnen. Das Kraftfahrzeug wird dann entlang der Trajektorie in die Parklücke bewegt.

Bei der Erfassung der Umgebung wird jedoch lediglich ein momentanes Bild erzeugt, so dass Objekte, die sich bewegen, nicht hinsichtlich ihrer Geschwindigkeit und Richtung erfasst werden. Aus diesem Grund wird auch während des Einparkvorganges weiterhin kontinuierlich mit Hilfe der Sensoren die Umgebung des Kraftfahrzeuges überwacht.

Zudem besteht bei derzeitigen Systemen die Gefahr, dass der Fahrer des Kraftfahrzeuges das System zum automatischen Einparken aktiviert und dann das Kraftfahrzeug verlässt, da sich dieser darauf verlässt, dass das Kraftfahrzeug ohne sein Zutun automatisch in die Parklücke eingeparkt wird. Um zu verhindern, dass der Fahrer das Kraftfahrzeug verlässt und ohne Anwesenheit des Fahrers das Fahrmanöver ausgeführt wird, ist zum Beispiel aus DE-A 10 2006 056 094 bekannt, das automatische System zur Unterstützung bei einem Fahrmanöver zu deaktivieren, sobald erkannt wird, dass der Fahrer nicht anwesend ist. Die Anwesenheit des Fahrers ist dabei notwendig, um das Fahrmanöver zu überwachen und im Falle von unvorhergesehenen Fällen eingreifen zu können.

### Offenbarung der Erfindung

### Vorteile der Erfindung

Das Verfahren zum automatischen Durchführen eines Fahrmanövers mit einem Kraftfahrzeug umfasst folgende Schritte:
(d) Erfassen der Umgebung des Kraftfahrzeugs mit einem ersten Erfassungssystem während der Vorbeifahrt an einer Parklücke,
(e) Berechnen einer Trajektorie, entlang der das Kraftfahrzeug während des Fahrmanövers bewegt wird, anhand der in Schritt (a) erfassten Umgebungsdaten,
(f) automatisches Bewegen des Kraftfahrzeugs entlang der Trajektorie zur Durchführung des Fahrmanövers, wobei die Umgebung des Kraftfahrzeugs mit einem zweiten vom ersten verschiedenen Erfassungssystem erfasst wird während sich das Kraftfahrzeug bewegt.

Durch die Überwachung mit zwei verschiedenen Erfassungssystemen wird eine zusätzliche Sicherheitsstufe eingebaut zur Überwachung der Umgebung des Kraftfahrzeugs während des Fahrmanövers. Die Systeme arbeiten unabhängig voneinander, eine Datenfusion, wie sie bei aus dem Stand der Technik bekannten Verfahren erfolgt, ist nicht notwendig.

Als erstes Erfassungssystem zur Erfassung der Umgebung des Kraftfahrzeuges werden üblicherweise Sensoren am Kraftfahrzeug eingesetzt. Diese befinden sich im Allgemeinen im Front- und im Heckbereich des Kraftfahrzeuges. Zusätzlich ist es auch möglich, an den Seiten des Kraftfahrzeuges weitere Sensoren vorzusehen. Sensoren, die zur Erfassung der Umgebung eingesetzt werden können, sind zum Beispiel Ultraschallsensoren, Infrarotsensoren, Radarsensoren oder LIDAR-Sensoren sowie optische Sensoren. Als optische Sensoren im Rahmen der vorliegenden Erfindung werden auch Kameras bezeichnet, deren erfasste Bilder mit einer Bildverarbeitungssoftware ausgewertet werden. Besonders bevorzugt als Sensoren des ersten Erfassungssystems zur Erfassung der Umgebung des Kraftfahrzeugs sind Ultraschallsensoren.

Als Sensoren des zweiten Erfassungssystems können die gleichen Sensortypen eingesetzt werden wie für das erste Erfassungssystem. Erfindungsgemäß sind die Sensortypen des ersten Erfassungssystems und des zweiten Erfassungssystems unterschiedlich. Besonders bevorzugt als Sensoren für das zweite Erfassungssystem sind optische Sensoren, ganz besonders bevorzugt sind Kameras. Wenn als Sensoren für das erste Erfassungssystem optische Sensoren eingesetzt werden, ist es möglich, auch für das zweite Erfassungssystem optische Sensoren zu nutzen. In diesem Fall werden die vom ersten und vom zweiten Erfassungssystem erfassten Daten auf unterschiedliche Weise ausgewertet.

Die Sensoren zur Erfassung der Umgebung werden üblicherweise im vorderen und im hinteren Stoßfänger des Kraftfahrzeugs positioniert. Aufgrund der Einbaulage werden jedoch nur ein Bereich vor dem Kraftfahrzeug und hinter dem Kraftfahrzeug erfasst. Die Bereiche direkt neben dem Kraftfahrzeug können durch die Sensoren aufgrund ihrer Einbaulage nicht erfasst werden. Der Erfassungsbereich im Front- bzw. Heckbereich des Kraftfahrzeugs umfasst jedoch nicht nur den Bereich, der sich unmittelbar vor dem Kraftfahrzeug befindet, sondern erstreckt sich auch noch - in Abhängigkeit von der Reichweite der Sensoren - ein Stück weit nach links und rechts über die Seiten des Kraftfahrzeugs hinaus.

Insbesondere um auch den Bereich neben dem Kraftfahrzeug zu erfassen, werden im vorderen Stoßfänger Sensoren positioniert, die nach links und nach rechts ihren Erfassungsbereich haben. Zusätzlich oder alternativ können auch im hinteren Stoßfänger Sensoren derart positioniert sein, dass diese einen Bereich links und rechts neben dem Kraftfahrzeug erfassen.

Mit Hilfe der Sensoren wird der Abstand zu Objekten in der Umgebung des Kraftfahrzeugs bestimmt, indem ein Signal von den Sensoren gesendet wird, das von einem Objekt reflektiert wird. Aus der Laufzeit des Signals lässt sich der Abstand zu dem Objekt bestimmen. Die Richtung zu dem Objekt ergibt sich dabei aus den gemessenen Abständen von mindestens zwei Sensoren. Bei optischen Sensoren, insbesondere bei Kameras, wird zur Auswertung und zur Bestimmung des Abstandes eine Bildverarbeitungssoftware herangezogen.

Aus den mit den Sensoren erfassten Daten lässt sich eine Umgebungskarte erstellen. In der Umgebungskarte sind jeweils die Umrisse von Objekten, die zum Beispiel eine Parklücke begrenzen, erfasst. Anhand der Begrenzungen, die durch die Objekte gegeben sind, lässt sich ermitteln, ob die Parklücke geeignet ist, das Kraftfahrzeug darin zu parken. Wenn dies der Fall ist, wird eine Trajektorie bestimmt, entlang der das Kraftfahrzeug zu bewegen ist, um das Fahrmanöver, insbesondere das Einparkmanöver, durchzuführen.

Zur Erstellung der Umgebungskarte und zum Berechnen der Trajektorie wird üblicherweise ein Steuergerät eines Fahrassistenzsystems, zum Beispiel ein Steuergerät eines Parkassistenzsystems eingesetzt. Dem Steuergerät werden die von den Sensoren erfassten Daten übergeben, so dass das Steuergerät die Umgebungskarte bestimmt. Alternativ ist es auch möglich, die Sensoren mit geeigneten Prozessoren zu versehen, so dass die Sensoren untereinander bereits die Umgebungskarte berechnen können. Aus den Daten der Umgebungskarte wird dann mit einer geeigneten Software, die im Steuergerät hinterlegt ist, die Trajektorie bestimmt.

Erfindungsgemäß wird während der Durchführung des Fahrmanövers die Umgebung des Kraftfahrzeugs mit dem zweiten Erfassungssystem erfasst. Bei der Erfassung der Umgebung wird geprüft, ob sich die Umgebungskarte ändert. Bei einer Änderung der Umgebungskarte kann auf ein sich bewegendes Objekt geschlossen werden. Die optischen Sensoren des zweiten Erfassungssystems sind dabei vorzugsweise im Frontbereich, im Heckbereich und seitlich am Kraftfahrzeug, zum Beispiel im Bereich der Außenspiegel positioniert. Hierdurch ist es möglich, das gesamte Umfeld um das Kraftfahrzeug zu erfassen.

Mit Hilfe des Steuergeräts werden während des Fahrmanövers die Längsführung und die Querführung des Kraftfahrzeugs gesteuert. Hierzu werden zum Beispiel die Bremsen des Kraftfahrzeugs, das Fahrpedal und die Lenkung angesteuert, um das Kraftfahrzeug zu beschleunigen, abzubremsen und zu lenken.

Erfindungsgemäß werden die vom ersten Erfassungssystem erfassten Daten auf ein portables Steuergerät übertragen. Durch die Verwendung des portablen Steuergerätes ist es möglich, das Fahrmanöver auch außerhalb des Kraftfahrzeugs zu überwachen. Der Fahrer muss nicht mehr notwendigerweise während des Fahrmanövers auf dem Fahrersitz sitzen.

Damit der Fahrer oder ein anderer Benutzer das Fahrmanöver während seiner Durchführung überwachen kann, werden auch die während des Fahrmanövers vom zweiten Erfassungssystem erfassten Daten an das portable Steuergerät übertragen. Hierbei ist es besonders bevorzugt, wenn die erfassten Daten in Form einer Umgebungskarte auf einer Anzeigevorrichtung des portablen Steuergeräts dargestellt werden. Als Anzeigevorrichtung eignet sich dabei jeder beliebige, dem Fachmann bekannte Monitor.

Um sicherzustellen, dass ein Benutzer das Fahrmanöver während seiner Durchführung ständig überwacht, umfasst das portable Steuergerät erfindungsgemäß einen Schalter, der während des Fahrmanövers unterbrechungsfrei betätigt werden muss. Bei einem Loslassen des Schalters wird das Fahrmanöver abgebrochen, indem das Kraftfahrzeug unmittelbar bis zum Stillstand abgebrochen wird. Um das Kraftfahrzeug zum Stillstand zu bremsen, wird vom portablen Steuergerät ein Signal an ein Steuergerät im Kraftfahrzeug, das das Fahrmanöver steuert gesendet. Das Steuergerät im Kraftfahrzeug betätigt dann die Bremsen, um das Kraftfahrzeug anzuhalten.

Um dem Fahrer des Kraftfahrzeugs zu ermöglichen, das Fahrmanöver auch außerhalb des Kraftfahrzeugs zu überwachen, werden die Daten an das portable Steuergerät bevorzugt drahtlos, beispielsweise über Funk, übertragen. Zur Datenübertragung eignen sich zum Beispiel Bluetooth oder WiFi.

Das Fahrmanöver, das mit dem erfindungsgemäßen Verfahren durchgeführt wird, ist insbesondere ein Einparkmanöver. Das Einparkmanöver kann dabei entweder ein Einparkmanöver in eine Querparklücke oder ein Einparkmanöver in eine Längsparklücke sein.

Eine Vorrichtung zur Durchführung des Verfahrens umfasst ein erstes Erfassungssystem und ein zweites Erfassungssystem zur Erfassung der Umgebung des Kraftfahrzeugs, ein Steuergerät zur Bestimmung einer Trajektorie, entlang der das Fahrmanöver durchgeführt wird, und zur Steuerung des Kraftfahrzeugs während des Fahrmanövers. Erfindungsgemäß sind ein portables Steuergerät, mit einer Anzeigevorrichtung zur Anzeige der von dem ersten und zweiten Erfassungssystem erfassten Daten und ein Schalter vorgesehen, wobei der Schalter während des Fahrmanövers kontinuierlich betätigt wird und bei Loslassen ein Signal sendet, um das Fahrmanöver abzubrechen.

### Kurze Beschreibung der Zeichnungen

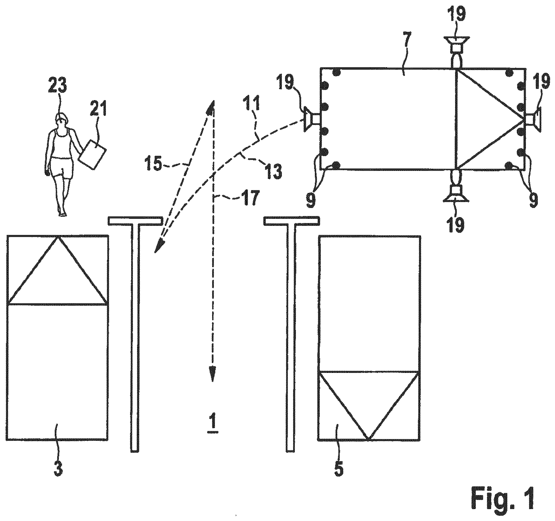

Ein Ausführungsbeispiel der Erfindung ist in der einzigen Figur dargestellt und wird in der nachfolgenden Beschreibung näher erläutert.

Die einzige Figur zeigt beispielhaft ein Einparkmanöver in eine Querparklücke mit dem erfindungsgemäßen Verfahren.

### Ausführungsformen der Erfindung

Die einzige Figur zeigt ein Einparkmanöver eines Kraftfahrzeugs in eine Querparklücke.

Eine Querparklücke 1 wird üblicherweise seitlich von Objekten, beispielsweise von Fahrzeugen, Pfosten, Wänden oder Mauern oder auch Linien begrenzt. In der hier dargestellten Ausführungsform ist die Querparklücke 1 von einem ersten Fahrzeug 3 auf einer Seite und auf der gegenüberliegenden Seite von einem zweiten Fahrzeug 5 begrenzt.

Bei einer ersten Vorbeifahrt mit einem Kraftfahrzeug 7 wird die Umgebung des Kraftfahrzeugs 7 mit geeigneten Sensoren 9 eines ersten Erfassungssystems erfasst. Als Sensoren für das erste Erfassungssystem eignen sich zum Beispiel Ultraschallsensoren, Infrarotsensoren, Radarsensoren, LIDAR-Sensoren oder optische Sensoren, beispielsweise Kameras. Als Sensoren für das erste Erfassungssystem besonders bevorzugt sind Ultraschallsensoren.

Um die Umgebung neben dem Kraftfahrzeug 7 zu erfassen und auszuwerten, ob eine geeignete Parklücke 1 vorliegt, sind Sensoren seitlich am Kraftfahrzeug 7 angebracht. Bei einem ausreichend langen Abstand zwischen zwei Objekten, beispielsweise zwischen zwei Fahrzeugen 3, 5 wird von einer geeigneten Parklücke ausgegangen. Da der Abstand für eine Querparklücke kleiner ist als für eine Längsparklücke ist es zum Beispiel möglich, dass vom Benutzer des Fahrassistenzsystems, im Allgemeinem dem Fahrer des Kraftfahrzeugs 7, vorgegeben wird, ob eine Querparklücke oder eine Längsparklücke gesucht wird. Wenn eine geeignete Parklücke 1 erfasst worden ist, wird anhand der erfassten Umgebungsdaten eine Umgebungskarte erstellt und eine Trajektorie 11 berechnet, entlang der das Kraftfahrzeug 7 in die Parklücke einparken kann. Die Trajektorie 11 beschreibt zum Beispiel den Weg, den der Mittelpunkt der Hinterachse des Kraftfahrzeugs 7 zurücklegt. In Abhängigkeit von der Position des Kraftfahrzeugs 7 und der Geomtrie der erfassten Parklücke 1 kann das Fahrmanöver einzügig oder mehrzügig durchgeführt werden. Bei einem mehrzügigen Fahrmanöver wechseln sich üblicherweise Vorwärtsfahrzüge und Rückwärtsfahrzüge ab. Bei dem hier dargestellten Fahrmanöver umfasst die Trajektorie 11 drei Fahrzüge, einen ersten Rückwärtsfahrzug 13, einen Vorwärtsfahrzug 15 und einen zweiten Rückwärtsfahrzug 17.

Nach Berechnung der Trajektorie 11 wird das Kraftfahrzeug 7 automatisch entlang der Trajektorie 11 in die Parklücke 1 bewegt. Hierzu werden zum Beispiel mit einem Steuergerät im Kraftfahrzeug 7 das Fahrpedal, die Bremsen, das Getriebe beziehungsweise die Gangwahl und die Lenkung des Kraftfahrzeugs 7 angesteuert.

Während des Fahrmanövers wird die Umgebung des Kraftfahrzeugs 7 erfindungsgemäß mit Sensoren 19 eines zweiten Erfassungssystems erfasst. Die Sensoren 19 des zweiten Erfassungssystems können ebenfalls Ultraschallsensoren, Infrarotsensoren, Radarsensoren, LIDAR-Sensoren oder optische Sensoren sein. Erfindungsgemäß werden für das erste Erfassungssystem und das zweite Erfassungssystem unterschiedliche Sensortypen eingesetzt. Als Sensoren für das zweite Erfassungssystem sind optische Sensoren, beziehungsweise Videosensoren, beispielsweise Kameras. Die Videosensoren sind vorzugsweise im Frontbereich, im Heckbereich und seitlich am Kraftfahrzeug 7 angeordnet. Hierbei ist es im Allgemeinen ausreichend, wenn ein Videosensor im Frontbereich, vorzugsweise mittig, ein Videosensor im Heckbereich, ebenfalls vorzugsweise mittig, jeweils ein Videosensor auf jeder Seite des Kraftfahrzeugs 7 angeordnet sind. Die Videosensoren im Frontbereich und im Heckbereich können zum Beispiel im Bereich der Windschutzscheibe, beispielsweise in der Halterung des Innenspiegels und im Bereich der Heckscheibe positioniert sein. Alternativ und bevorzugt werden die Videosensoren im Bereich der Stoßfänger angeordnet.

Die von den Sensoren 9 des ersten Erfassungssystems und den Sensoren 19 des zweiten Erfassungssystems erfassten Daten werden an ein portables Steuergerät 21 übertagen, das von einem Bediener, üblicherweise dem Fahrer 23 des Kraftfahrzeugs 7, betätigt wird. Die Daten werden vorzugsweise drahtlos übertragen, so dass eine Überwachung nicht ortsgebunden erfolgen muss. Durch die drahtlose Übertragung ist es zum Beispiel möglich, dass das Fahrmanöver vom Fahrer auch außerhalb des Kraftfahrzeugs 7 überwacht wird. Hierzu weist das portable Steuergerät 21 eine Anzeigevorrichtung, beispielsweise einen Monitor, auf, auf der die von den Sensoren 9 des ersten Erfassungssystems beziehungsweise von den Sensoren 19 des zweiten Erfassungssystems erfassten Daten in Form einer Umgebungskarte dargestellt werden. Über die Anzeigevorrichtung kann sich der Fahrer über die aktuelle Situation informieren und bei Bedarf das Fahrmanöver beenden.

Die Umgebungskarte wird aus den erfassten Daten des ersten Erfassungssystems beziehungsweise des zweiten Erfassungssystems berechnet. Die Darstellung kann dann zum Beispiel in Form von Umrisslinien in Draufsicht erfolgen. Alternativ ist es bei einer Erfassung mit optischen Sensoren auch möglich, zum Beispiel direkt das erfasste Bild der optischen Sensoren anzuzeigen. Erfindungsgemäß erfolgt jedoch auch hier eine Berechnung einer Umgebungskarte und eine Darstellung in Draufsicht. Durch geeignete Bildauswertung bei optischen Sensoren ist es hier zum Beispiel möglich, die einzelnen von den optischen Sensoren erfassten Objekte zu klassifizieren und entsprechend darzustellen. So können zum Beispiel für unterschiedliche Objekte verschiedene Symbole eingesetzt werden oder es erfolgt eine Beschriftung.

Um sicherzustellen, dass das gesamte Fahrmanöver überwacht wird, weist das portable Steuergerät 21 einen Schalter auf, der während des gesamten Fahrmanövers betätigt werden muss. Sobald der Schalter losgelassen wird, wird das Fahrmanöver unmittelbar durch sofortiges Abbremsen Des Kraftfahrzeugs 7 zum Stillstand beendet. Durch Loslassen des Schalters kann der Fahrer 23 das Fahrmanöver auch gezielt unterbrechen, zum Beispiel, wenn plötzlich eine Gefahrensituation auftaucht, indem beispielsweise ein sich bewegendes Objekt in den zu befahrenden Bereich gelangt. Das sich bewegende Objekt kann zum Beispiel auch ein Fußgänger oder ein Radfahrer sein, der den vorgesehenen Weg des Kraftfahrzeuges 7 kreuzt.

Der Fahrer des Kraftfahrzeugs 7, der das Fahrmanöver überwacht kann während des Fahrmanövers im Kraftfahrzeug 7 sein oder außerhalb des Kraftfahrzeugs 7. Auch ist es möglich, dass der Fahrer das Fahrmanöver unterbricht, während der Unterbrechung aussteigt und das Fahrmanöver anschließend von außerhalb des Kraftfahrzeugs 7 weiter überwacht. Dies kann zum Beispiel dann sinnvoll sein, wenn die Parklücke 1 so schmal ist, dass der Fahrer nach dem Einparken das Kraftfahrzeug 7 nicht mehr verlassen kann, da sich die Türen nicht mehr weit genug öffnen lassen.

Das erfindungsgemäße Verfahren eignet sich aufgrund der Möglichkeit für den Fahrer das Fahrmanöver auch außerhalb des Kraftfahrzeugs 7 zu überwachen insbesondere für Einparkmanöver. Neben Einparkmanövern können jedoch auch beliebige andere Fahrmanöver automatisch durchgeführt werden, zum Beispiel Rangierfahrten oder Fahrten durch enge Gassen oder Straßen und insbesondere auch das Ausparken aus einer Parklücke, insbesondere aus einer engen Parklücke. Um das Fahrmanöver automatisch durchführen zu können ist es dabei unabhängig vom geplanten Fahrmanöver notwendig, zunächst die Umgebung zu erfassen und anhand der erfassten Umgebung eine Trajektorie zu berechnen, entlang der das Fahrmanöver durchgeführt wird. Wenn nicht der gesamte während des Fahrmanövers zu befahrende Bereich erfasst werden kann, ist auch eine Durchführung des Fahrmanövers in einzelnen Abschnitten möglich. Hierbei wird jeweils für den bereits erfassten Bereich eine Trajektorie berechnet, während der Fahrt entlang der Trajektorie die Umgebung weiter erfasst und eine Verlängerung der Trajektorie bestimmt, bis das Fahrmanöver beendet worden ist. Bevorzugt ist es jedoch, die Umgebung, in der das Fahrmanöver durchgeführt werden soll, vollständig zu erfassen und die Trajektorie bis zum Erreichen des Zielpunktes auf einmal zu berechnen, wie dies für Einparkmanöver in Parklücken möglich ist.

## Patentansprüche

1. Verfahren zum automatischen Durchführen eines Fahrmanövers mit einem Kraftfahrzeug (7), folgende Schritte umfassend:
(a) Erfassen der Umgebung des Kraftfahrzeugs (7) mit einem ersten Erfassungssystem während der Vorbeifahrt an einer Parklücke (1), wobei eine Umgebungskarte anhand der erfassten Umgebungsdaten des ersten Erfassungssystems berechnet wird,
(b) Berechnen einer Trajektorie (11), entlang der das Kraftfahrzeug (7) während des Fahrmanövers bewegt wird, anhand der in Schritt (a) erfassten Umgebungsdaten,
(c) automatisches Bewegen des Kraftfahrzeugs (7) entlang der Trajektorie (11) zur Durchführung des Fahrmanövers, wobei die Umgebung des Kraftfahrzeugs (7) mit einem zweiten vom ersten verschiedenen Erfassungssystem erfasst wird während sich das Kraftfahrzeug (7) bewegt, **dadurch gekennzeichnet, dass** das zweite Erfassungssystem ein videobasiertes System (19) ist und geprüft wird, ob sich die Umgebungskarte ändert und bei einer Änderung der Umgebungskarte auf ein sich bewegendes Objekt geschlossen wird, wobei die von dem ersten Erfassungssystem in Schritt (a) erfassten Daten auf ein portables Steuergerät (21) übertragen werden und während des Einparkens vom zweiten Erfassungssystem in Schritt (c) erfasste Daten an das portable Steuergerät (21) übertragen werden, wobei ein Schalter des portablen Steuergeräts (21) während des Einparkvorgangs unterbrechungsfrei betätigt wird und bei Loslassen des Schalters das Kraftfahrzeug (7) unmittelbar in den Stillstand gebremst wird, wobei die Umgebungskarte auf einer Anzeigevorrichtung des portablen Steuergeräts (21) dargestellt wird und die von optischen Sensoren erfassten Objekte klassifiziert und dargestellt werden.

2. Verfahren gemäß Anspruch 1, **dadurch gekennzeichnet, dass** das erste Erfassungssystem Ultraschallsensoren (9), Infrarotsensoren, Radarsensoren, LIDAR-Sensoren oder optische Sensoren umfasst.

3. Verfahren gemäß einem der Ansprüche 1 oder 2, **dadurch gekennzeichnet, dass** von dem ersten Erfassungssystem und von dem zweiten Erfassungssystem erfasste Daten drahtlos an das portable Steuergerät (21) übertragen werden.

4. Verfahren gemäß einem der Ansprüche 1 bis 3, **dadurch gekennzeichnet, dass** das Fahrmanöver ein Einparkmanöver ist.

5. Vorrichtung, umfassend ein erstes Erfassungssystem und ein zweites Erfassungssystem zur Erfassung der Umgebung des Kraftfahrzeugs (7), ein Steuergerät zur Bestimmung einer Trajektorie (11), entlang der das Fahrmanöver durchgeführt wird, und zur Steuerung des Kraftfahrzeugs (7) während des Fahrmanövers, **dadurch gekennzeichnet, dass** ein portables Steuergerät (21), mit einer Anzeigevorrichtung zur Anzeige der von dem ersten und zweiten Erfassungssystem erfassten Daten und ein Schalter vorgesehen ist, der während des Fahrmanövers unterbrechungsfrei betätigt wird und bei Loslassen ein Signal sendet, um das Fahrmanöver abzubrechen, wobei die Vorrichtung dazu eingerichtet ist, ein Verfahren gemäß einem der Ansprüche 1 bis 4 durchzuführen.

## Claims

1. Method for automatically carrying out a driving manoeuvre with a motor vehicle (7), comprising the following steps:
(a) detecting the surroundings of the motor vehicle (7) with the aid of a first detection system while driving past a parking space (1), wherein a map of the surroundings is calculated on the basis of the detected surroundings data of the first detection system,
(b) calculating a trajectory (11) along which the motor vehicle (7) is moved during the driving manoeuvre, this being done using the surroundings data detected in step (a),
(c) automatically moving the motor vehicle (7) along the trajectory (11) in order to carry out the driving manoeuvre, the surroundings of the motor vehicle (7) being detected with the aid of a second detection system, differing from the first, while the motor vehicle (7) is moving, **characterized in that** the second detection system is a video-based system (19) and a check is performed to determine whether the map of the surroundings changes, and a change in the map of the surroundings results in a moving object being inferred, wherein the data detected by the first detection system in step (a) are transmitted to a portable control unit (21), and data detected during parking by the second detection system in step (c) are transmitted to the portable control unit (21), a switch of the portable control unit (21) being actuated without interruption during the parking process, and the motor vehicle (7) being braked directly to a standstill upon release of the switch, wherein the map of the surroundings is presented on a display device of the portable control unit (21) and the objects detected by optical sensors are classified and presented.

2. Method according to Claim 1, **characterized in that** the first detection system comprises ultrasonic sensors (9), infrared sensors, radar sensors, LIDAR sensors or optical sensors.

3. Method according to either of Claims 1 and 2, **characterized in that** data detected by the first detection system and by the second detection system are transmitted to the portable control unit (21) in a wireless fashion.

4. Method according to one of Claims 1 to 3, **characterized in that** the driving manoeuvre is a parking manoeuvre.

5. Device comprising a first detection system and a second detection system for detecting the surroundings of the motor vehicle (7), a control unit for determining a trajectory (11) along which the driving manoeuvre is carried out, and for controlling the motor vehicle (7) during the driving manoeuvre, **characterized in that** a portable control unit (21), which has a display device for displaying the data detected by the first and second detection systems, and a switch are provided, which switch is actuated without interruption during the driving manoeuvre and transmits a signal upon release in order to discontinue the driving manoeuvre, wherein the device is configured to carry out a method according to one of Claims 1 to 4.

## Revendications

1. Procédé d'exécution automatique d'une manoeuvre de conduite d'un véhicule automobile (7), le procédé comportant les étapes suivantes :
(a) saisie de l'environnement du véhicule (7) à l'aide d'un premier système de saisie pendant son passage le long d'un emplacement de stationnement (1), une carte de l'environ étant calculée à l'aide des données d'environ saisies par le premier système de saisie,
(b) à l'aide des données d'environ saisies à l'étape (a), calcul d'une trajectoire (11) le long de laquelle le véhicule (7) sera déplacé pendant la manoeuvre de conduite,
(c) déplacement automatique du véhicule automobile (7) le long de la trajectoire (11) en vue d'exécuter la manoeuvre de conduite, l'environnement du véhicule (7) étant saisi à l'aide d'un deuxième système de saisie différent du premier pendant que le véhicule (7) se déplace,
**caractérisé en ce que**
le deuxième système de saisie est un système (19) à base vidéo et l'on vérifie si la carte d'environ varie et dans le cas d'une variation de la carte d'environ, on en conclut à un objet en mouvement, les données saisies par le premier système de saisie pendant l'étape (a) étant transférées sur un appareil de commande (21) portable et les données saisies pendant la manoeuvre de stationnement par le deuxième système de saisie à l'étape (c) étant transférées sur l'appareil de commande portable (21), un commutateur de l'appareil de commande (21) portable étant actionné sans interruption pendant l'opération de stationnement et le véhicule (7) étant freiné immédiatement jusqu'à l'arrêt lorsque le commutateur est relâché, la carte d'environ étant affichée sur un dispositif d'affichage de l'appareil de commande portable (21) et les objets saisis par les capteurs optiques étant classifiés et affichés.

2. Procédé selon la revendication 1, **caractérisé en ce que** le premier système de saisie comporte des capteurs (9) à ultrasons, les capteurs à infrarouge, les capteurs radar, les capteurs lidar ou les capteurs optiques.

3. Procédé selon l'une des revendications 1 ou 2, **caractérisé en ce que** les données saisies par le premier système de saisie et les données saisies par le deuxième système de saisie sont transférées sans fil à l'appareil de commande portable (21).

4. Procédé selon l'une des revendications 1 à 3, **caractérisé en ce que** la manoeuvre de conduite est une manoeuvre de stationnement.

5. Dispositif, comprenant un premier système de saisie et un deuxième système de saisie qui saisissent l'environnement du véhicule automobile (7), un appareil de commande qui détermine une trajectoire (11) le long de laquelle la manoeuvre de conduite est exécutée et qui commande le véhicule automobile (7) pendant la manoeuvre de conduite, **caractérisé en ce que**
le dispositif présente un appareil de commande (21) portable qui présente un dispositif d'affichage qui affiche les données saisies par le premier et le deuxième système de saisie et un commutateur qui est actionné sans interruption pendant la manoeuvre de conduite et qui envoie un signal qui interrompt la manoeuvre de conduite lorsqu'il est relâché, le dispositif étant configuré pour l'exécution d'un procédé selon l'une des revendications 1 à 4.
